# EUROPÄISCHE PATENTANMELDUNG

(11) **EP 1 762 604 A1**
(43) Veröffentlichungstag der Anmeldung: **14.03.2007**
(21) Anmeldenummer: 06018547.7
(22) Anmeldetag: 05.09.2006
(51) Int. Cl.: C09J 4/00, C09D 4/00

(54) **Licht- und/oder thermisch härtendes Versiegelungs- und Befestigungsmaterial für natürliches Gestein und Bautenschutz**

(30) Priorität: 13.09.2005 DE 102005043795
(71) Anmelder: Heraeus Kulzer GmbH, 63450 Hanau (DE)
(72) Erfinder: Eppinger, Berhard, 35781 Weilburg (DE)
(74) Vertreter: Kühn, Hans-Christian

(57) **Zusammenfassung**

Es wird ein licht- und/oder thermisch härtendes Versiegelungs- und Befestigungsmaterial beschrieben, enthaltend eine Lösung enthaltend ein flüchtiges organisches Lösungsmittel, ein Polymer, ein Monomer, vorzugsweise ein Vernetzermonomer, und ein Initiator-System, das zum Versiegeln der Poren von Gesteinsoberflächen und/oder zum Befestigen von Gesteinsoberflächen einsetzbar ist.

## Beschreibung

Die Erfindung betrifft ein lichthärtendes und/oder thermisch härtendes Versiegelungs- und Befestigungsmaterial für den Schutz von Gesteinsoberflächen und ein Verfahren zum Versiegeln und/oder Befestigen von Gesteinsoberflächen.

Natürliche und geschliffene Gesteinsoberflächen weisen meist viele Poren auf, in denen sich Verschmutzungen oder z.B. Algen oder Pilze festsetzen können.

Herkömmliche Bautenschutzmittel auf Silikon und Fluorelastomerbasis, wie z.B. in DE 196 34 500 A1, DE 197 07 219 A1 und EP 344 919 B1 beschrieben, machen das Gestein in der Regel wasserabstoßend. Es wurden auch anorganische Polykondensate enthaltende Beschichtungsmaterialien vorgeschlagen (DE 195 44 763 A1, DE 102 19 127 A1), die auch thermische oder Photo-Initiatoren enthalten können.

Aus DE 100 18 645 ist ein Verfahren zum Färben von Granit bekannt, bei dem eine färbende Lösung und ein Versiegelungsmaterial auf Urethanbasis eingesetzt werden.

Aufgabe der Erfindung ist es, eine wirksame lichthärtende Beschichtung zum Verschluss der Poren bereitzustellen.

Die Aufgabe wird gelöst durch eine Zusammensetzung enthaltend ein flüchtiges organisches Lösungsmittel, ein Polymer, ein Monomer, vorzugsweise ein Vernetzermonomer, und ein Initiator-System, sowie optional weiter übliche Zusätze.

Die Lösung wird auf die Oberfläche aufgebracht. Zeit zum Eindringen ist gegeben, während das Lösungsmittel verdunstet, und anschließend kann eine Lichthärtung vorgenommen werden.

Dabei ist es vorteilhaft, wenn das Schutzmaterial möglichst tief in die poröse Oberfläche eindringt. Dies ist naturgemäß bei sehr dünnflüssigen Lösungen besonders der Fall.

Handelt es sich um ein leichtflüchtiges Lösungsmittel, so steht eine sofort trockene Oberfläche für die Polymerisation/Lichthärtung zur Verfügung.

Die Lichthärtung erfolgt zweckmäßig mit UV oder sichtbarem Licht. Die thermische Härtung kann mit Infrarotlicht oder Mikrowellenstrahlung bewirkt werden. Möglich ist auch eine Kombination zweier oder mehrerer der genannten Strahlungsarten. Es kann z.B. eine kombinierte licht- und thermische Härtung vorgenommnen werden, wenn dies vorteilhaft erscheint.

Besonders geeignet sind die erfindungsgemäßen Lösungen ("das Material") zur Beschichtung von Grabsteinen oder Küchenarbeitsplatten aus Granit. Auch z.B. Sandstein oder Plattenkalk sind als Substrate geeignet. Insofern ist das Material auch zur Anwendung im Denkmal- und Bautenschutz geeignet, etwa zur Verfestigung und Stabilisierung von Sandsteinoberflächen bei der Restauration. Bei der Beschichtung oder Infiltration von Sandsteinoberflächen soll das Beschichtungsmaterial die Oberfläche stabilisieren und gleichzeitig verschließen.

Der Vorteil gegenüber den handelsüblichen Fluor- und Silikonbeschichtungsmaterialien ist die erfolgende Polymerisation der Schicht zu thermoplastischem Material, die dieser eine wesentlich höhere Festigkeit und Haltbarkeit verleiht.

Besonders geeignet sind dünnflüssige Lösungen mit einer Viskosität von ab 0,2 mPas (Aceton) bis 100 mPas bei 25°C.

Als Lösungsmittel kommen flüchtige organische Lösungsmittel in Betracht. Bevorzugt sind Essigsäureethylester; Essigsäuremethylester; Essigsäurebutylester, Ethyl-methylketon oder Aceton, besonders bevorzugt Aceton.

Als Polymere eignen sich in solchen Lösungsmitteln lösliche Polymere. Bevorzugt ist die Verwendung von unvernetztem Polymethylmethacrylat (PMMA).

Als Monomere/Vernetzer kommen bi-, tri- und mehrfunktionell Vernetzer in Frage. Als besonders geeignet erwiesen sich
TMPTA = Trimethylolpropantriacrylat
TRIM = Trimethylolpropantrimethacrylat
SR 295 = RTT 190 = Pentaerythritol-tetraacrylat
   Urethandimethacrylat
TEDMA = Triethylenglykoldimethacrylat

Als Bestandteile des Photoinitiator-Systems kommen auf dem Gebiet übliche in Frage, wie etwa Benzoin, Benzil, Benzophenon, die Benzoinalkylenether, Ester von Phenylglyoxylsäure, alpha - Trichloracetophenon, alpha -Diethoxyacetophenon, alpha - Hydroxyacetophenone, Benzildimethylketal, Methylbenzoylformate, 1-Benzoylcyclohexanon, alpha -Aminoacetophenon, D,L- Camphrchinon, 2,2-Diethoxyacetophenon, N- Mehtyldiethanolamin, 4-Benzoyl-4'-methyldiphenylsulfid, Isopropylthioxanthon, Ethyl-4-dimethylaminobenzoat, N- Methyldiethanolamin, 1-Hydroxy-cyclohexyl-phenyl-keton, Bis(2,4,6-trimethylbenzoyl)-phosphinoxid, 2-Methyl-1-[4- (methylthio)phenyl]-2-morpholinopropanon, 1, 2-Hydroxy-2- methyl-1-phenyl-propan-1-on, Bis(2,6-dimethoxybenzoyl)-2,4,4- trimethylphenylphosphinoxid, 1-[4-(2-Hydroxyethoxy)-phenyl]-2- hydroxy-2-methyl-1-propan-1-on, [2-hydroxy-2-methyl-1-[4-(1- methylvinyl)phenyl]-propanon, 2,4,6- Trimethylbenzoylphenylphosphinsäureethylester oder Diphenyl(2,4,6- trimethylbenzoyl)phosphinoxid in Frage.

Bevorzugt sind Triacylphosphinoxide, ggf. zusammen mit weiteren Photoinitiatoren wie Campherchinon.

Als Bestandteile des thermischen Initiatorsystems kommen insbesondere organische Peroxide in Form von Diacylperoxiden, Peroxydicarbonaten, Alkylperestern, Dialkylperoxiden, Perketalen, Ketonperoxiden und Alkylhydroperoxiden in Frage. Konkrete und bevorzugte Beispiele für thermische Initiatoren sind Dibenzoylperoxid, tert-Butylperbenzoat sowie Azobisisobutyronitril.

Zusätzlich können weitere für Beschichtungsmittel gebräuchliche Zusätze enthalten sein, die optional in Mengen 0 bis 20 Gew.-%, insbesondere von 0-10 Gew.-% vorliegen.

Beispiele für derartige Stoffe sind Verlaufsmittel, Weichmacher (z. B. Extender, wie Talkum, Schwerspat, Aluminiumsilikat, Dolomit, Entschäumer und filmbildende Hilfsmittel, z. B. Cellulose-Derivate, Mattierungsmittel in üblichen Mengen) sowie insbesondere Haftvermittler.Als Haftvermittler werden dabei Alkoxysilane, wie beispielsweise N- beta -Aminoethyl-, - Aminopropyltrimethoxysilan, -Aminopropyltrimethoxysilan, N-Methyl- beta - aminopropyltrimethoxysilan oder triaminomodifiziertes Propyltrimethoxysilan (z. B. Haftvermittler DYNASLYAN TM , "Typ TRIAMO", Handelsprodukt der Dynamit Nobel Chemie) eingesetzt. Weitere oberflächenaktive Substanzen, mit deren Hilfe die Oberflächenspannung der Beschichtungsformulierung reguliert und gute Auftragseigenschaften erreicht werden können, sind gemäss der EP 0 035 272 z.B. Silikone, wie verschiedene Polymethylsiloxane-Typen, besonders in Konzentrationen von 0,0001 bis 2 Gew.-%.

Als zusätzliche Haftvermittler können 0 bis 10, vorzugsweise 2 bis 5 Gew.-% eines carboxyfunktionellen (Meth)acrylsäureesters verwendet werden. Beispiele sind beta -carboxyethylacrylat und EBECRYL 169 oder 170 zu beziehen über UCB, S.A., Drogenbos, Belgien.
Ein weiteres, sehr gebräuchliches Additiv sind UV-Absorber, die in Konzentrationen von z.B. 0,2 bis 20 Gew.-%, vorzugsweise von 2 bis 8 Gew.-% enthalten sein können. UV-Absorber können z.B. aus der Gruppe der Hydroxybenzotriazole, Triazine und Hydroxybenzophenone ausgewählt werden (siehe z.B. EP 247 480). Ferner können Antioxidantien und Lichtschutzmittel wie z.B. Phenole wie BHT oder sterisch gehinderte Amine enthalten sein.

Die Lösung kann auf jede übliche Weise auf die zu behandelnde Oberfläche aufgebracht werden, z.B. durch Schleuderbeschichten, Rakeln, Sprühen, Spritzen, Schleudern, Giessen, Rollen oder Streichen bzw. Pinseln.
Zweckmäßig wird nach dem Aufbringen der Lösung gewartet bis das Lösungsmittel zumindest zum Teil verdunstet ist. Während dieser Zeit kann die Lösung in die Poren eindringen.

Die Polymerisation erfolgt zweckmäßig unter einer oder mehreren der drei Lichtarten: UV-Licht, Mischlicht und sichtbares Licht (Blaulicht), wobei Mischlicht UV und sichtbare Anteile enthält.

Nach der Belichtung liegt eine Versiegelung der Poren vor.

Ein Beispiel für eine geeignete Lösung ist die folgende Richtrezeptur:
100 g Aceton (2-Propanon)
3 g PMMA (unvernetztes Polymer)
0,5 g TMPTA (Trimethylopropan-triacrylat) /Vernetzer)
0,004 g Luzirin TPO (Photoinitiator)
0,003 g DL-Camperchinon (Photoinitiator)

Ausgehend davon sind folgende Varianten geeignet:
1. Anstelle von Aceton kann z.B. Essigsäureethylester; Essigsäuremethylester; Essigsäurebutylester oder Ethyl-methylketon verwandt werden.
2. Die PMMA-Konzentration liegt zweckmäßig im Bereich von 1 % bis 12 %.
3. Als Vernetzer haben sich als geeignet erwiesen:
   TMPTA = Trimethylolpropantriacrylat
   TRIM = Trimethylolpropantrimethacrylat
   SR 295 = RTT 190 = Pentaerythritol-tetraacrylat
      Urethandimethacrylat
   TEDMA = Triethylenglykoldimethacrylat
4. Die Konzentrationen der beiden Photoinitatoren bzw. jedes einzelnen Photoinitiators können variiert werden, um den Anforderungen der jeweiligen Anwendung zu genügen.

## Patentansprüche

1. Licht- und/oder thermisch härtendes Versiegelungs- und Befestigungsmaterial, enthaltend ein flüchtiges organisches Lösungsmittel, ein Polymer, ein Monomer, vorzugsweise ein Vernetzer-monomer, und ein Initiator-System.

2. Versiegelungs- und Befestigungsmaterial nach Anspruch 1, wobei das Lösungsmittel Aceton ist.

3. Versiegelungs- und Befestigungsmaterial nach einem der vorstehenden Ansprüche, wobei das Polymer unvernetztes PMMA ist.

4. Versiegelungs- und Befestigungsmaterial nach einem der vorstehenden Ansprüche, wobei das Monomer der Gruppe bestehend aus
TMPTA = Trimethylolpropantriacrylat,
TRIM = Trimethylolpropantrimethacrylat,
SR 295 = RTT 190 = Pentaerythritol-tetraacrylat ,
UDMA = Urethandimethacrylat (Additionsprodukt aus 2-Hydroxyethylmethacrylat und 2,2,4- Hexamethylendiisocyanat), und
TEDMA = Triethylenglykoldimethacrylat
angehört.

5. Versiegelungs- und Befestigungsmaterial nach einem der vorstehenden Ansprüche, wobei das Photoinitiator-System ein Triacylphosphinoxid und Campherchinon enthält.

6. Verfahren zum Versiegeln der Poren von Gesteinsoberflächen und/oder zum Befestigen von Gesteinsoberflächen, mit den Schritten
A Bereitstellen eines Versiegelungs- und Befestigungsmaterial nach einem der vorstehenden Ansprüche,
B Aufbringen der Lösung auf die Gesteinsoberfläche,
C Eindringenlassen der Lösung in die Poren unter zumindest teilweiser Verdunstung des Lösungsmittels,
D Belichten der Gesteinsoberfläche mit ultraviolettem Licht, sichtbarem Licht, InfrarotLicht oder Mikrowellenstrahlung.

7. Versiegelungs- oder Befestigungsschicht auf Gesteinsoberflächen und in den Poren von Gesteinsoberflächen, hergestellt nach einem Verfahren nach Anspruch 6.
